Europäisches Patentamt

European Patent Office

Office européen des brevets

(19)

(11) Veröffentlichungsnummer: **0 222 287 B1**

## (12) EUROPÄISCHE PATENTSCHRIFT

(45) Veröffentlichungstag der Patentschrift: **20.03.91**

(51) Int. Cl.5: **F16L 47/02, B29C 65/30**

(21) Anmeldenummer: **86115185.0**

(22) Anmeldetag: **03.11.86**

(54) **Elektro-Schweissfitting oder Elektro-Schweissmuffe.**

(30) Priorität: **13.11.85 DE 3540193**

(43) Veröffentlichungstag der Anmeldung:
**20.05.87 Patentblatt 87/21**

(45) Bekanntmachung des Hinweises auf die
Patenterteilung:
**20.03.91 Patentblatt 91/12**

(84) Benannte Vertragsstaaten:
**AT BE CH DE FR GB IT LI NL SE**

(56) Entgegenhaltungen:
**FR-A- 2 522 389**
**NL-A- 6 412 575**
**NL-A- 6 601 024**

(73) Patentinhaber: **Friedrichsfeld GmbH Keramik-**
**und Kunststoffwerke**
**Steinzeugstrasse 50**
**W-6800 Mannheim 71(DE)**

(72) Erfinder: **Sichler, Wolfgang**
**Sinsheimer Strasse 20**
**W-6800 Mannheim 61(DE)**

(74) Vertreter: **Klose, Hans, Dipl.-Phys. et al**
**Kurfürstenstrasse 32**
**W-6700 Ludwigshafen(DE)**

## Beschreibung

Die Erfindung bezieht sich auf ein Elektro-Schweißfitting oder eine Elektro-Schweißmuffe gemäß dem Oberbegriff des Anspruchs 1. Eine solche Elektro-Schweißmuffe ist aus dem Dokument FR-A-2522 389 bekannt.

Aus der DE-AS 28 23 455 ist eine weitere Elektro-Schweißmuffe aus thermoplastischem Kunststoff bekannt, die im Bereich ihrer Innenfläche eine Heizwendel aufweist. Zum Schweißen werden die Drahtenden der Heizwendel mit einer Stromquelle verbunden, um der Heizwendel den erforderlichen Schweißstrom zuzuführen. Beim Schweißen wird aufgrund der Erwärmung der Heizwendel der umgebende Werkstoff plastisch. Um eine gute Schweißverbindung zu gewährleisten, muß während des Schweißens ein hinreichender Anpressdruck in den miteinander zu verbindenden Flächen aufrechterhalten werden. Dies erfolgte bisher durch eine entsprechend dicke Ausbildung der Wandstärke des Kunststoffkörpers der Schweißmuffe oder des Schweißfittings. Dadurch wurde erreicht, daß entsprechend dem Wärmegradienten der Körper radial außen nur wenig erwärmt wurde und dort weitgehend fest und steif blieb. Das im Inneren im Bereich der Heizwendel erwärmte und plastische Material konnte somit nicht ausweichen. Aufgrund der somit relativ großen Wandstärke von Schweißfitting bzw. Schweißmuffe war ein hoher Materialeinsatz nötig. Ferner wurde hierdurch das Gewicht und das Volumen entsprechend groß, was nachteilig im Hinblick auf Handhabung, Transportkosten, Lagerhaltung usw. war.

Der Erfindung liegt die Aufgabe zugrunde, ein Schweißfitting oder eine Schweißmuffe der genannten Art dahingehend weiterzubilden, daß bei reduziertem Materialeinsatz gleichwohl beim Schweißen die Anpreßkraft aufgebracht werden kann.

Gemäß der Erfindung wird diese Aufgabe von einer Vorrichtung nach dem Oberbegriff des Anspruchs 1 ausgehend mit den Kennzeichnenden Merkmalen des Anspruchs 1 gelöst.

Mittels der an der Außenseite angeordneten Armierung wird in einfacher Weise eine Verstärkung gewährleistet, so daß die Materialdicke der Schweißmuffe bzw. des Schweißfittings gegenüber bekannten Anordnungen erheblich reduziert werden kann. Aufgrund der erfindungsgemäß reduzierten Wanddicke des Körpers kann beim Schweißen an der Außenfläche zwar eine relativ starke Erwärmung auftreten, doch wird durch die Außenarmierung ein Aufweiten in radialer Richtung nach außen vermieden. Insbesondere bei großen Muffen für Rohre mit großen Durchmessern ist die Reduzierung der Wanddicke des Muffenkörpers aufgrund der Materialersparnis an Kunststoff von besonderer Bedeutung. Die beim Schweißen durch die Erwärmung des Körpers bedingte Volumenvergrößerung bewirkt eine Verkleinerung des Innendurchmessers vom Muffen- bzw. Fittingkörper und den gewünschten Anpressdruck in der Schweißzone. Das im inneren Bereich beim Schweißen durch die Heizwendel erwärmte, plastische Material kann praktisch keine Volumenveränderung radial nach außen durchführen, da die Armierung aufgrund des geringeren thermischen Ausdehnungskoeffizienten erfindungsgemäß gleichsam einen starren Mantel bildet. Vielmehr wird durch das sich radial nach innen ausdehnende Material eine Verkleinerung des Innendurchmessers der Schweißmuffe oder des Schweißfittings erreicht, wodurch sich der erforderliche Anpreßdruck auf das zu verschweißende Rohr in der Schweiß-Fügezone ausbildet. Die Handhabung bei der Montage bzw. beim Schweißen ist einfach, da das Bedienungspersonal keine zusätzlichen Maßnahmen ergreifen muß. Erfindungsgemäß kann die Schweißmuffe oder das Schweißfitting mit äußerst geringem Aufwand aus einem handelsüblichen Rohr, insbesondere einem Normrohr, gefertigt werden, dessen Innendurchmesser etwa dem Außendurchmesser der zu verbindenden Rohre entspricht. Es reicht erfindungsgemäß für den Muffen- oder Fittingkörper die Wanddicke des Rohres selbst oder auch der nächsten Durchmesserstufe durchaus aus, und Spezialanfertigungen, besondere Formen und ähnliches werden entbehrlich.

Eine Ausgestaltung ist dadurch gekennzeichnet, daß die Armierung als eine Wicklung aus einem Draht, insbesondere Stahldraht, ausgebildet ist. Zweckmäßig weist die Außenfläche des Körpers eine wendelförmige Nut auf, in welcher die genannte Wicklung angeordnet und befestigt ist. Die Wicklung bzw. Armierung ist in der wendelförmigen Nut angeordnet und verankert, so daß ein Aufweiten der Wicklung infolge der Ausdehnung des Körpers aus thermoplastischem Kunststoff beim Schweißen zuverlässig unterbunden wird. Die Wicklung ist in die wendelförmige Nut fest eingebettet, so daß ein Nachgeben beim Schweißen erfindungsgemäß vermieden wird. Aufgrund der Anordnung in der Nut und die hierdurch bedingte Haftreibung wird verhindert, daß die Wicklung sich löst und/oder sich aufweitet. Die Enden der Wicklung brauchen grundsätzlich nicht verankert oder sonstwie miteinander verbunden werden, da aufgrund der besagten Reibung zwischen Wicklung und Nutwandung eine zuverlässige Fixierung sichergestellt wird. Wesentlich ist ferner, daß eine exakte Maßhaltigkeit der Außenfläche nicht zu beachten ist und große Toleranzen zugelassen werden können, da die Wicklung quasi im Endlosverfahren auf die Außenfläche aufgewickelt wird. Die hierdurch erzielten Kostenvorteile liegen auf der Hand. Das extrudierte Rohr der nächsten Nennweite wird lediglich auf das erforderliche Längenmaß zurecht geschnitten, und in die Außenfläche wird unmittelbar nachfolgend die Wicklung eingebracht. Besondere Endbefestigungen und Verankerungen der Drahtenden sind nicht erforderlich.

In einer besonderen Ausgestaltung liegen die Windungen des Drahtes in Längsrichtung in einem Abstand nebeneinander, welcher wenigstens gleich groß dem Drahtdurchmesser ist. Hierdurch wird sichergestellt, daß beim Schweißen die zwischen den Windungen befindlichen Materialstege einerseits eine zuverlässige Verankerung der Wicklung gewährleisten und andererseits aufgrund zu großer Abstände der Anpressdruck zu gering wird.

In einer weiteren Ausgestaltung enden die Wicklungsenden in einer Bohrung, insbesondere der Kontrollbohrung der Schweißmuffe oder des Schweißfittings. Ein unbeabsichtigtes Herausreißen der Wicklungsenden beim Transport oder der Lagerung wird damit in einfacher Weise verhindert. Eine einfache Sicherung gegen ein Ausweiten beim Schweißen wird gewährleistet.

In alternativen Ausgestaltungen ist die Armierung als ein auf der Muffe verbleibendes Rohr oder auch als Stützhalbschalen ausgebildet. Maßgebend ist für alle Ausführungsformen der wenigstens um den Faktor 5 geringere thermische Ausdehnungskoeffizient der Armierung gegenüber dem Ausdehnungskoeffizient des Körpers. Es ist bevorzugt, den Ausdehnungskoeffizienten der Armierung wenigstens um den Faktor 10 kleiner vorzugeben. Die Armierung besteht insbesondere aus Metall, sei es in Form einer Drahtwicklung oder eines Metallrohres. Im Rahmen der Erfindung liegen auch solche Ausführungsformen, bei welchen die Armierung aus faserverstärktem Kunststoff besteht, der auf den Muffen- bzw. Fittingkörper entweder als vorgefertigtes Rohr aufgepreßt oder direkt als Laminat aufgewickelt wird und anschließend aushärtet. Die Länge der Armierung ist im Rahmen dieser Erfindung wenigstens gleichgroß wie die Länge der Schweißzone der im Inneren angeordneten Heizleiterwicklung bzw. Heizwendel. Andererseits ist die Länge der erfindungsgemäßen Armierung kürzer als die Länge der Muffe- bzw. des Fittings.

Die Erfindung wird nachfolgend an Hand des in der Zeichnung dargestellten Ausführungsbeispieles näher erläutert. Es zeigen:

Fig. 1      einen Längsschnitt durch ein Schweißfitting,

Fig. 2      vergrößert einen Ausschnitt der Wicklung im Bereich des Endes der Schweißmuffe,

Fig. 3 - 8      Ausführungsformen der rohrförmigen Armierung aus einem metallischen Werkstoff,

Fig. 9, 10      Ausführungsformen der Armierung aus einem faserverstärkten Kunststoff.

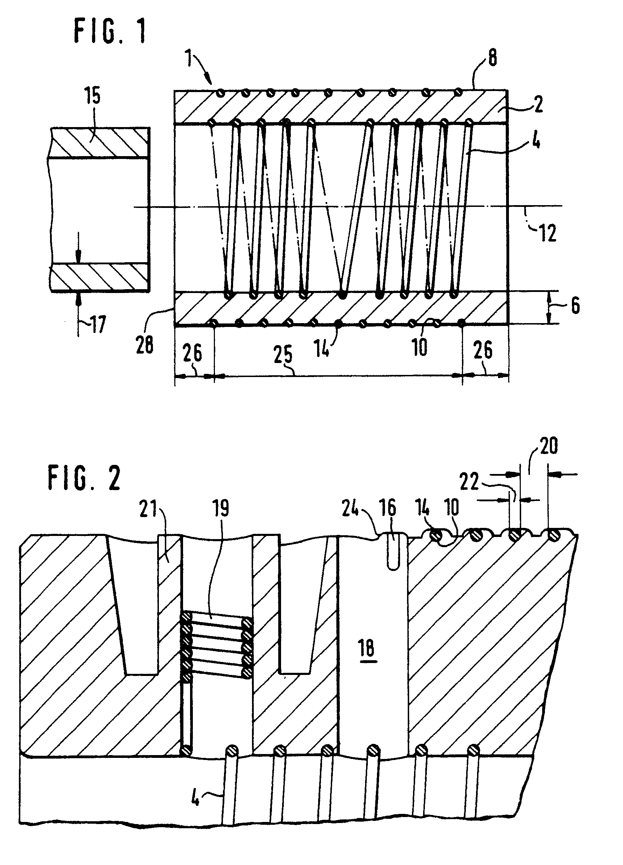

Fig. 1 zeigt einen Längsschnitt durch ein Schweißfitting 1 mit einem Körper 2, an dessen Innenfläche in bekannter Weise die Heizwendel 4 angeordnet ist. Die Wanddicke 6 des Körpers 2 ist vergleichsweise klein. Die Außenfläche 8 des im wesentlichen zylindrischen Körpers 2 ist mit einer wendelförmigen Nut 10 versehen, die sich um die Längsachse 12 windet. In diese Nut 10 ist eine Wicklung 14 eingebettet. Die Wicklung 14 wird sozusagen im Endlosverfahren in die Nut 10 eingebracht, wobei hinsichtlich Maßhaltigkeit, Rundheit sowie Durchmessertoleranzen relativ große Schwankungen zulässig sind. Besondere Verankerungen für die beiden Drahtenden 16 sind entbehrlich. Die Schweißmuffe weist ferner eine Buchse 21 mit einer Kontaktwendel 19 auf, über welche die Stromzufuhr zur Heizwendel 4 erfolgt. Die Kontaktwendel 19 ist aus dem Ende des Drahtes der Heizwendel 4 gebildet. Entsprechend ist am anderen Ende der Muffe bzw. des Schweißfittings eine weitere Buchse mit Kontaktwendel vorgesehen.

Die als Außenarmierung ausgebildete Wicklung 14 weist eine Länge 25 auf, die im Rahmen dieser Erfindung wenigstens gleichgroß ist wie die axiale Länge der Heizwendel 4. Die Enden der Wicklung 14 weisen einen Abstand 26 zur Stirnfläche 28 des Muffenkörpers 2 auf. Aufgrund dieses Abstandes kann der benötigte Materialaufwand für die Armierung klein gehalten werden. Wesentlich ist, daß radial außen die Schweißzone bzw. die Heizwendel 4 von der Armierung umgeben ist und ein radiales Ausweichen des Materials verhindert wird. Der Innendurchmesser des Muffenkörpers 2 entspricht im wesentlichen dem Außendurchmesser des zu verschweißenden Rohres 15. Aufgrund der erfindungsgemäß vorgesehen Armierung ist die Wanddicke 6 des Körpers 2 im wesentlichen gleich oder nur um einen kleinen Prozentsatz größer als die Wanddicke 17 Rohres 15. Die Wanddicke 6 des Körpers 2 ist erfindungsgemäß höchstens 10 Prozent, zweckmäßig höchstens 5 Prozent, größer als die Wanddicke 17 des zu verbindenden Rohres 15. Entsprechend dem in der Zeichnung links angedeuteten Ende des Rohres 15 kann in den Schweißfitting 1 auch von der anderen Seite, also in der Zeichnung rechts, ein Ende eines zweiten Rohres eingeschoben werden, das mittels des Schweißfittings mit dem Rohr 15 zu verbunden ist.

Fig. 2 zeigt einen vergrößerten Ausschnitt einer Schweißmuffe, wobei hier das in eine Kontrollbohrung 18 hinein gebogene Drahtende 16 gut zu erkennen ist. Diese Schweißmuffe kann Bestandteil eines Schweißfittings sein, wobei wie anhand von Fig. 1 erläutert, zwei oder mehrere derartige Muffen vorgesehen sind. Ferner kann im Rahmen der Erfindung die Schweißmuffe auch am Ende eines Rohres, einer Abzweigung, eines T-Stückes, einer Armatur oder dergleichen angeordnet sein. Das Drahtende 16 ist etwas nach innen in die Kontrollbohrung 18 gedrückt, um ein unbeabsichtigtes Herausreißen beim Transport oder auf der Baustelle zu verhindern. Die einzelnen Windungen der Wicklung 14 weisen in Richtung der Längsachse einen Abstand 20 auf, der mindestens so groß ist wie der Durchmesser 22 des Drahtes der Wicklung. Die Wicklung bzw. der Draht wird in einem kontinuierlichen Verfahren in die wendelförmige Nut 10 eingelegt. Mit einem Messer wird die Nut 10 in die Außenfläche eingeschnitten, wobei seitliche Materialanhäufungen 24 entstehen.

Unmittelbar nachfolgend wird der Draht bzw. die Wicklung eingelegt, und die Materialanhäufungen 24 werden mittels Anpreßrollen oder dergleichen über den eingelegten Draht gedrückt. Hierdurch wird eine verbesserte Verankerunge der Wicklung in der Außenfläche 8 gewährleistet. Lediglich der Einfachheit halber sind in Fig. 2 die Kontrollbohrung 18 mit dem Drahtende 16 vom Ende der Heizwendel 4 in axialer Richtung beabstandet angeordnet. Die Kontrollöffnung 18 bzw. das Drahtende der Wicklung 14 können im Rahmen dieser Erfindung derart angeordnet werden, daß, wie oben anhand von Fig. 1 erläutert, die Wicklung 14 wenigstens die gleiche axiale Länge aufweist wie die Heizwendel 4.

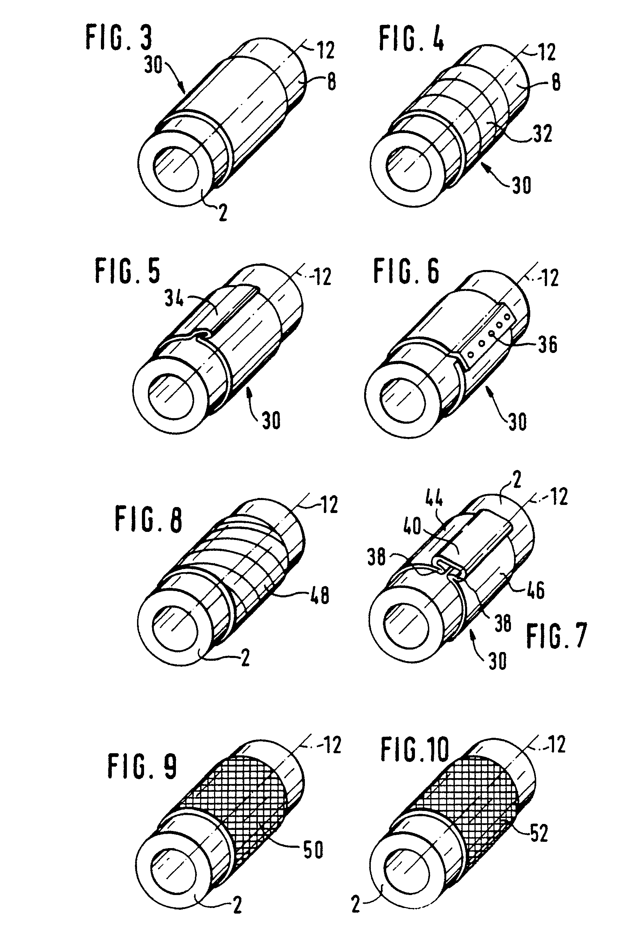

In den nachfolgend zu erläuternden Figuren sind zweckmäßige Ausführungsformen der Armierung auf dem Kunststoff-Muffenkörper schematisch dargestellt. Gemäß Fig. 3 ist die Armierung als ein Rohr 30 ausgebildet, das auf die Außenfläche 8 des Muffenkörpers 2 aufgepreßt ist. Es gelangt ein nahtlos gezogenes oder mit einer Längsnaht verschweißtes metallisches Rohr zum Einsatz. Das Rohr ist erfindungsgemäß mit Preßsitz auf der Außenfläche des Körpers 2 angeordnet. Hierzu wird bei der Montage der Körper abgekühlt, wodurch der Durchmesser des Körpers 2 sich verkleinert und das Rohr problemlos aufgeschoben werden kann. Alternativ kann im Rahmen der Erfindung auch das Rohr 30 vor der Montage erwärmt werden, so daß aufgrund der nachfolgenden Abkühlung des Rohres der Preßsitz erreicht wird.

Bei der Ausführungsform gemäß Fig. 4 besteht das auf der Außenfläche 8 angeordnete Rohr aus drei geschlossenen Ringstücken 32, die auf den Körper 2 aufgeschoben wurden. Die Montage erfolgt gemäß obigen Ausführungen nach Abkühlung des Körpers 2 bzw. nach Erwärmung der Ringstücke 32.

Gemäß der Fig. 5 besteht die Armierung aus einem Rohr 30, das aus einem Blech gerollt ist welches an seinen Längskanten mittels einer Bördelnaht verbunden ist. Gemäß Fig. 6 ist auf die Außenfläche des Körpers 2 ein aus Blech gerolltes Rohr 30 aufgepreßt, dessen Längsseiten überlappen und mittels Schweißpunkten 36 miteinander verbunden sind. Die Vormontage dieses Rohres 30 erfolgt mittels einer kombinierten Wickel-Spannvorrichtung, damit während des Punktschweißens die erforderliche Vorspannung auf dem Armierungsblech bzw. Rohr gewährleistet wird.

Bei der Ausführungsform gemäß Fig. 7 ist das Rohr 30 aus einem gerollten Blech gebildet, das an seinen beiden aneinanderliegenden Längskanten Sicken 38 aufweist. Mit einem Verschlußstück 40, das mit seinen nach innen umgebogenen Enden in die genannten Sicken 38 eingreift, erfolgt die Verbindung. Das Verschlußstück 40 ist parallel zur Längsachse 12 in der dargestellten Weise aufschiebbar. Das Rohr besteht aus zwei Halbschalen 44, 46, die auf der in der Zeichnung nicht sichtbaren Rückseite in entsprechender Weise mit einem Verschlußstück verbunden sind. Diese Stützhalbschalen 44, 46 werden vor dem Schweißen auf dem Fittingkörper 2 angeordnet. Nach dem Schweißen können sie weider abgenommen werden und bei einem anderen Fitting 2 wieder zum Einsatz gelangen. Im Rahmen dieser Erfindung kann anstelle der beiden erläuterten diametral einander gegenüberliegenden Verschlußstücke nur ein einziges Verschlußstück vorgesehen sein, wobei entsprechend den Ausführungsformen von Fig. 5 und 6 ein gerolltes Blech an seine Längskanten mit einem einzigen Verschlußstück 40 verbunden wird.

Gemäß Fig. 8 ist die Armierung erfindungsgemäß als ein wendelförmig auf den Muffenkörper 2 aufgewickelter Blechstreifen 48 ausgebildet. Anfang und Ende dieser Wicklung sind entweder im Muffenkörper 2 mechanisch verankert oder mit den benachbarten Windungen durch Schweißen, beispielsweise Punktschweißen, verbunden.

Fig. 9 zeigt eine wesentliche Ausführungsform, bei welcher die Armierung als ein faserverstärktes Rohr 50 ausgebildet ist, das auf den Körper 2 aufgepreßt ist. Das erfindungsgemäß vorgefertigte Rohr 50 besteht aus einem faserverstärkten Kunststoff, und zwar insbesondere einem glasfaserverstärkten Polyesterharz, wobei die Fasern mit plus/minus 45 Grad Wicklungen angeordnet sind.

Schließlich ist in Fig. 10 eine besondere Ausführungsform dargestellt, gemäß welcher auf den Fittingkörper 2 direkt ein Laminat 52 aus faserverstärktem Kunststoff aufgewickelt ist. Es gelangt insbesondere ein durch Lichteinwirkung oder durch thermische Wirkung aushärtender glasfaserverstärkter Kunststoff, und zwar zweckmäßig Polyesterharz, zum Einsatz. Auch bei dieser Ausführungsform werden zweckmäßig plus/minus 45 Grad Wicklungen vorgesehen.

**Ansprüche**

1. Elektro-Schweißfitting (1) oder Elektro-Schweißmuffe mit einem Körper (2) aus einem thermoplastischen und schweißbaren Werkstoff, insbesondere Polyolefin, wie Polyäthylen, mit einem an einer Innenfläche des Körpers (2) angeordneten, bevorzugt zu einer Heizwendel (4) gewickelten Heizdraht, welchem zum Schweißen Strom zuführbar ist, und mit einer an der Außenfläche (8) des körpers (2) angeordneten Armierung (14, 30), deren Ende zur Stirnfläche (28) des Körpers (2) einen vorgegebenen Abstand (26) aufweist,
dadurch gekennzeichnet, daß die Armierung auf der Außenfläche (8) als wendelförmige wicklung (14) oder als über den Umfang geschlossenes Rohr (30) befestigt ist, mit dem Körper (2) eine vorgefertigte Baueinheit bildet und auch nach dem Schweißen auf dieser verbleibt,
daß zwischen dem Ende der Armierung (14, 30) und der Stirnfläche (28) des körpers (2) eine Buchse (21) zur Stromzuführung auf den Heizdraht vorgesehen ist
und daß der thermische Ausdehnungskoeffizient der Armierung (14, 30) wenigstens um den Faktor 5 kleiner ist als der thermische Ausdehnungskoeffizient des Körpers (2).

2. Elektro-Schweißfitting nach Anspruch 1, dadurch gekennzeichnet, daß die axiale Länge (25) der Armierung (14, 30) wenigstens so groß ist wie die Länge der Heizwendel (4).

3. Elektro-Schweißfitting nach Anspruch 1 oder 2, dadurch gekennzeichnet, daß der thermische Ausdehnungskoeffizient der Armierung (14, 30) wenigstens um den Faktor 10 kleiner ist als der thermische Ausdehnungskoeffizient des Körpers (2).

4. Elektro-Schweißfitting nach einem der Ansprüche 1 bis 3, dadurch gekennzeichnet, daß die wicklung (14) in einer wendelförmigen Nut (10) in der Außenfläche (8) des Körpers (2) angeordnet ist.

5. Elektro-Schweißfitting nach einem der Ansprüche 1 bis 4, dadurch gekennzeichnet, daß wenigstens ein Ende (16) der Wicklung (14) in einer Bohrung (18) endet, welche insbesondere als kontrollbohrung ausgebildet ist, und/oder radial nach innen gebogen und in dem Körper (2) verankert ist.

6. Elektro-Schweißfitting nach einem der Ansprüche 1 bis 5, dadurch gekennzeichnet, daß der axiale Abstand (20) von benachbarten windungen der Wicklung (14) wenigstens gleich groß ist wie der Durchmesser (22) des Wicklungsdrahtes.

7. Elektro-Schweißfitting nach einem der Ansprüche 4 bis 6, dadurch gekennzeichnet, daß die beim Einschneiden der Nut (10) in den Körper (2) entstandenen seitlichen Materialanhäufungen (24) von außen über den wicklungsdraht gedrückt sind.

8. Elektro-Schweißfitting nach einem der Ansprüche 1 bis 3, dadurch gekennzeichnet, daß das Rohr (30) aus zwei Stützhalbschalen (44, 46) besteht, welche mittels verschlußstücken (40) miteinander verbunden sind.

9. Elektro-Schweißfitting nach einem der Ansprüche 1 bis 3, dadurch gekennzeichnet, daß das Rohr (30) aus wenigstens zwei axial nebeneinander angeordneten Ringstücken (32) oder einem gewickelten Blechstreifen (48) oder aus einem gerollten Blech besteht, das an seinen Längskanten mittels einer Bördelnaht oder durch Punktschweißung (36) verbunden ist.

10. Elektro-Schweißfitting nach einem der Ansprüche 1 bis 3, dadurch gekennzeichnet, daß das Rohr (30) als ein mit Fasern verstärktes Kunststoffrohr ausgebildet ist, wobei die Fasern bevorzugt als plus-minus 45° Wicklungen ausgebildet sind, welche in einem Kunststoffharz eingebettet sind.

## Claims

1. An electroweld fitting (1) or electroweld sleeve having a body (2) of themoplastic weldable material, particularly a polyolefin, such as polyethylene, with a heating wire arranged on an inner surface of the body (2) and preferably wound into a heating coil (4), to which current can be supplied for welding, and with a reinforcement (14,30) arranged on the outer surface (8) of the body (2), the end of the said reinforcement being at a given spacing (26) from the end face (28), of the body (2), characterised in that the reinforcement is secured on the outer surface (8) in the form of a helical coil (14) or as a tube (30) closed over the circumference, forms with the body (2) a prefabricated unit and remains on the latter even after welding, in that between the end of the reinforcement (14,30) and the end face (28) current to the heating wire, and in that between the end face reinforcement (14,30) and the end face (28) of the body (2) there is a socket (21) for supplying current to the heating wire, and in that the thermal coefficient of expansion of the reforcement (14,30) is less than the thermal coefficient of expansion of the body (2) by at least a factor of 5.

2. An electroweld fitting according to claim 1, characterised in that the axial length (25) of the reinforcement (14,30) is at least equal to the length of the heating coil (4).

3. An electroweld fitting according to claim 1 or 2, characterised in that the thermal coefficient of expansion of the reinforcement (14,30) is less than the thermal coefficient of expansion of the body (2) by at least a factor of 10.

4. An electroweld fitting according to one of claims 1 to 3, characterised in that the coil (14) is arranged in a helical groove (10) in the outer surface (8) of the body (2).

5. An electroweld fitting according to one of claims 1 to 4, characterised in that at least one end (16) of the coil (14) ends in a bore (18) which is constructed more particularly as a control bore, and/or is bent radically inwards and anchored in the body (2).

6. An electroweld fitting according to one of claims 1 to 5, characterised in that the axial spacing (20) of adjacent windings of the coil (14) is at least as great as the diameter (22) of the coiled wire.

7. An electroweld fitting according to one of claims 4 to 6, characterised in that the lateral accumulations of material (24) formed when the groove (10) is cut into the body (2) are pressed over the coiled wire from outside.

8. An electroweld fitting according to one of claims 1 to 3, characterised in that the tube (30) consists of two support half-shells (44,46) connected to each other by olosure members (40).

9. An electroweld fitting according to one of claims 1 to 3, characterised in that the tube (30) consists of at least two ring members (32) arranged axially side by side or a coiled sheet metal strip (48) or a rolled metal sheet joined along its longitudinal edges by a knurled seam or by spot welding (36).

10. An electroweld fitting according to one of claims 1 to 3, charactised in that the tube (30) is constructed as a fibre-reinforced plastics tube, the fibres preferably being formed as plus-minus 45° windings embedded in a plastics resin.

## Revendications

1. Raccord à souder par électricité (1) ou manchon à souder par électricité, comprenant un corps (2) fait d'une matière thermoplastique et soudable, en particulier de polyoléfine, comme le polyéthylène, équipé d'un fil de chauffage disposé contre la surface intérieure du corps (2), de préférence enroulé en une Spire de chauffage (4), auquel on peut amener du courant pour les soudages, et une armature (14,30) disposée contre la surface extérieure (8) du corps (2), dont l'extrémité se trouve à une distance prédéterminée (36) de la surface frontale (28) du corps (2), *caractérisé en ce que* l'armature est fixée sur la surface extérieure (8) sous la forme d'un enroulement hélicoïdal (14) ou sous la forme d'un tube (30) fermé sur toute sa circonférence, forme une unité préfabriquée avec le corps (2), et subsiste sur ce corps après le soudage, *en ce que*, entre l'extrémité de l'armature (14, 30) et la surface frontale (28) du corps (2), est prévue une tubulure (21) servant à l'amenée du courant au fil de chauffage, et *en ce que* le coefficient de dilatation thermique de l'armature (14, 30) est inférieur au coefficient de dilatation thermique du corps (2) d'un facteur d'au moins 5.

2. Raccord à souder par l'électricité selon la Revendication 1, *caractérisé en ce que* la longueur axiale (25) de l'armature (14, 30) est au moins aussi grande que la longueur de la spire de soudage (4).

3. Raccord à souder par l'électricité selon la Revendication 1 ou 2, *caractérisé en ce que* le coefficient de dilatation themique de l'armature (14,30) est inférieur au coefficient de dilatation thermique du corps (2) d'un facteur d'au moins 10.

4. Raccord à souder par l'électricité selon l'une des Revendications 1 à 3, *caractérisé en ce que* l'enroulement (14) est disposé dans une rainure hélicoïdale (10) pratiquée dans la surface extérieure (8) du corps (2).

5. Raccord à souder par l'électricité selon l'une des Revendications 1 à 4, *caractérisé en ce qu*'au moins une extrémité (16) de l'enroulement (14) se termine dans un perçage (18) qui est constitué en particulier par un perçage de contrôle et/ou replié radialement vers l'intérieur et ancré dans le corps (2).

6. Raccord à souder par l'électricité selon l'une des Revendications 1 à 5, **caractérisé en ce que** la distance d'écartement axiale (20) entre les spires adjacentes de l'enroulement est au moins égale au diamètre (22) du fil de l'enroulement.

7. Raccord à souder par l'électricité selon l'une des Revendications 4 à 6, **caractérisé en ce que** les digues latérales de matière (24) qui se forment lorsqu'on taille la rainure (10) dans le corps (2) sont refoulées de l'extérieur par dessus le fil de l'enroulement.

8. Raccord à souder par l'électricité selon l'une des Revendications 1 à 3, **caractérisé en ce que** le tube (30) est composé de deux demi-coquilles de soutien (44,46) qui sont reliées l'une à l'autre à l'aide de pièces de fermeture (40).

9. Raccord à souder par l'électricité selon l'une des Revendications 1 à 3, **caractérisé en ce que** le tube (30) est composé d'au moins deux tronçons annulaires (32) disposés axialement l'un à côté de l'autre ou d'une bande de tôle enroulée (48) ou d'une tôle enroulée qui est assemblée le long de ses bords longitudinaux au moyen d'un joint serti ou par une soudure par points (36).

10. Raccord à souder par l'électricité selon l'une des Revendications 1 à 3, **caractérisé en ce que** le tube (30) est constitué par un tube de matière plastique renforcée de fibres, les fibres étant de préférence disposées en enroulements inclinés de plus ou moins 45°, qui sont noyés dans une résine synthétique.

FIG. 1

FIG. 2

FIG. 3

FIG. 4

FIG. 5

FIG. 6

FIG. 8

FIG. 7

FIG. 9

FIG.10